# EUROPÄISCHE PATENTSCHRIFT

(11) **EP 2 621 320 B1**
(45) Veröffentlichungstag und Bekanntmachung des Hinweises auf die Patenterteilung: **18.06.2014**
(21) Anmeldenummer: 11773208.1
(22) Anmeldetag: 14.09.2011
(51) Int. Cl.: A47J 43/25

(54) **EINSTELLBARES REIBBLATT**
ADJUSTABLE GRATING BLADE
LAME DE RÂPE RÉGLABLE

(30) Priorität: 28.09.2010 DE 102010041531
(43) Veröffentlichungstag der Anmeldung: 07.08.2013
(73) Patentinhaber: BSH Bosch und Siemens Hausgeräte GmbH, 81739 München (DE)
(72) Erfinder: BLAGOTINSEK, Andrej, 2380 Slovenj Gradec (SI); POGACAR, Toni, 3311 Sempeter (SI); UPLAZNIK, Marko, 3312 Prebold (SI)
(86) Internationale Anmeldenummer: PCT/EP2011/065898
(87) Internationale Veröffentlichungsnummer: WO 2012/041702

(56) Entgegenhaltungen:
- EP-A2- 0 101 417
- DE-A1- 3 112 074
- DE-C- 804 113
- DE-U1-202004 006 428
- DE-U1-202009 006 708
- US-A- 4 283 979

## Beschreibung

### Gebiet der Erfindung

Die Erfindung betrifft ein Reibblatt für eine Küchenmaschine, wobei das Reibblatt ein Messerblatt mit einer Grundfläche und mehreren Schneidkanten aufweist, um ein an das Reibblatt herangeführtes Reibgut zu schneiden, und die Schneidkanten auf einer Schneidseite des Messerblatts über die Ebene der Grundfläche hinausragen. Sie betrifft außerdem eine Küchenmaschine mit einem solchen Reibblatt.

### Hintergrund der Erfindung

Küchenmaschinen sind heutzutage weit verbreitet, weil sie eine einfache, schnelle, saubere und in der Qualität einheitliche Zubereitung von Lebensmitteln in der Küche erlauben. Ein wichtiges Einsatzbereich der Küchenmaschinen liegt dabei bei dem Zerkleinern von Lebensmitteln. Im Allgemeinen hängt dabei aber die Größe und Form der zerkleinerten Lebensmittel in erster Linie von den konstruktiven Eigenschaften der Küchenmaschine ab und der Benutzer hat deshalb im Vergleich zur manuellen Zubereitung wenig Möglichkeiten, auf das Zerkleinerungsergebnis Einfluss zu nehmen. Jedoch ist zunehmend ein Wunsch nach größerer Individualisierung bei der Lebensmittelzubereitung zu beobachten.

Das Patent US 4,283,979 offenbart eine Hobelanordnung für eine Küchenmaschine, die ein Messer und eine Distanzscheibe aufweist, die drehfest miteinander verbunden sind. Die Hobelanordnung kann von einer Welle der Küchenmaschine in Rotation versetzt werden, um dem Messer der Hobelanordnung zugeführtes Hobelgut in Scheiben zu schneiden. Dabei ist der Abstand zwischen dem Messer und der Distanzscheibe einstellbar, wodurch sich die Dicke der hergestellten Scheiben vorbestimmen lässt. Der Benutzer kann die Scheibendicke nahezu kontinuierlich nach den individuellen Wünschen einstellen. Die Distanzscheibe ist unterhalb des Messers mit einer Öffnung versehen, durch die geschnittenes Hobelgut durch die Distanzscheibe treten kann. Das Messer kann auch in dieser Öffnung versenkt werden, um bei Nicht-Gebrauch die Schneidkante des Messers zu schonen und Verletzungen vorzubeugen.

Weiter offenbart die Offenlegungsschrift US 2007/0062349 A1 einen handbetätigten brettartigen Lebensmittelhobel, bei dem sich ebenfalls die Scheibendicke durch Verändern der Position einer Schneidkante zu einer Fläche, auf der das Gemüse gleitet, einstellbar ist.

Auch sind aus dem Stand der Technik zahlreiche Lebensmittelreiben bekannt, mit denen sich z.B. Gemüse oder Käse in dünnere oder dickere Streifen schneiden lassen. Solche Reiben weisen typischerweise Öffnungen mit Schneidkanten auf, wobei das Reibgut an letzteren geschnitten wird und dann durch die Öffnungen auf die andere Seite der Reibe gelangt. Auf dem Markt sind zahlreiche Typen von Reiben zur Handbetätigung verbreitet, mit denen sich Streifen unterschiedlicher Form und Größe herstellen lassen.

Aus der Patentanmeldung EP 0 101 417 A2 ist eine Reibe für den Haushalt bekannt, die eine geformte Platte mit im Wesentlichen rechteckigem Umriss und einer Mehrzahl von Durchgangslöchern umfasst. Von einer Arbeitsfläche der geformten Platte stehen kegelstumpfförmige, gezackte ringförmige Höcker vor, die die Durchgangslöcher begrenzen. Die Reibe umfasst weiter eine glatte Platte, die eine Vielzahl von Löchern aufweist, die von den ringförmigen Höckern durchdrungen werden können und die mit der geformten Platte lösbar verbunden werden kann.

Darüber hinaus sind auch Reibscheiben bekannt, die in mit Durchlaufschnitzlern ausgestattete Küchenmaschinen eingesetzt werden können. Auch hier werden unterschiedliche Reibschneiden für unterschiedliche Formen und Größen des geschnittenen Reibguts angeboten. So zeigt das Patent US 7,226,012 B2 exemplarisch eine Ausführungsform einer Reibscheibe.

### Der Erfindung zugrundeliegende Aufgabe

Der Erfindung liegt die Aufgabe zugrunde, eine verbesserte Reibblattanordnung bereitzustellen. Insbesondere soll es mit der Reibblattanordnung möglich sein, dass ein Benutzer auf einfache Weise die Größe des Reibprodukts bestimmen kann. Außerdem soll eine Küchenmaschine mit einer derart verbesserten Reibblattanordnung bereitgestellt werden.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch eine Reibblattanordnung, die ein Messerblatt mit einer Grundfläche und mehreren Schneidkanten umfasst, um ein an die Reibblattanordnung herangeführtes Reibgut zu schneiden, und die Schneidkanten auf einer Schneidseite des Messerblatts über die Ebene der Grundfläche hinausragen. Weiterhin umfasst die erfindungsgemäße Reibblattanordnung ein Distanzblatt, das auf der Schneidseite des Messerblatts angeordnet ist und eine oder mehrere Öffnungen aufweist, durch die wenigstens Teile der Schneidkanten hindurchreichen können, um auf der dem Messerblatt abgewandten Seite des Distanzblatts über das Distanzblatt hinauszuragen. Weiter wird die Erfindungsaufgabe durch eine Küchenmaschine mit einer solchen Reibblattanordnung gelöst.

Die Erfindung nutzt unter anderem aus, dass bei gleichem Messerblatt die Größe des Reibguts, insbesondere dessen Dicke, durch den Abstand zwischen dem Messerblatt und dem Distanzblatt bestimmt werden kann. Genauer bestimmt das Maß, um das die (Teile der) Schneidkanten auf der dem Messerblatt abgewandten Seite des Distanzblatts über die Fläche des Distanzblatts hinausragen, die Dicke des abgeschnittenen Reibguts. Dadurch ist vorteilhaft erreichbar, dass ein Küchenmaschinenhersteller seinen Kunden mit einem einzigen Messerblatt-Typ, also ohne eine Vielzahl unterschiedlicher Messerblätter bereitstellen zu müssen, ermöglichen kann, Reibgut zu verschiedenen Formen und Größen zu zerkleinern. Denn bei gleichem Messerblatt lassen sich allein durch unterschiedliche Abstände zwischen Messerblatt und Distanzblatt solche unterschiedlichen Größen und Formen des zerschnittenen Reibguts erzielen.

Durch die Erfindung kann folglich dem Verbraucherwunsch, das Reibprodukt nach eigenen Vorstellungen, insbesondere auch in Abhängigkeit des verarbeiteten Lebensmittels und des Küchenrezepts, individuell zu bestimmen, nachgekommen werden, ohne dass eine Vielzahl unterschiedlicher Messerblätter hergestellt werden müssen. Mit anderen Worten, durch die Erfindung lassen sich die Individualisierungsmöglichkeiten bei der Benutzung der Küchenmaschine verbessern und gleichzeitig Kosten senken.

Die Erfindung eignet sich insbesondere für den Einsatz in einer mit einem Durchlaufschnitzler ausgestatteten Küchenmaschine. Die Reibblattanordnung kann vorteilhafterweise elektromotorisch oder manuell in eine Rotation versetzt werden.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Das bevorzugte Distanzblatt ist als Distanzscheibe ausgebildet. Dabei ist eine Scheibe im Sinne der vorliegenden Erfindung ist ein im Wesentlichen kreisrundes und ebenes Blatt. Das bevorzugte Messerblatt ist als Messerscheibe oder alternativ als Sektor einer Scheibe ausgebildet. Entsprechend ist die bevorzugte Reibblattanordnung als Reibscheibenanordnung ausgebildet, in dem Sinne, dass das Distanzblatt ist eine Distanzscheibe und das Messerblatt ist eine Messerscheibe oder ein Messerscheibensektor ist. Eine solche Reibscheibenanordnung eignet sich insbesondere für Küchenmaschinen mit einer Welle, die die Reibscheibenanordnung um eine Achse senkrecht zur Reibscheibenanordnung in Rotation versetzen kann, um ein an die Reibblattanordnung herangeführtes Reibgut zu schneiden. Dennoch sind natürlich auch Ausführungen der Erfindung denkbar, bei denen das Messerblatt und/oder das Distanzblatt nicht als Scheiben(-sektor) ausgeführt sind. So kann die Distanzscheibe z.B. die Form einer Mantelfläche eines Zylinders aufweisen; die Messerfläche kann ebenfalls die Form einer solchen Mantelfläche oder zumindest eines Abschnitts einer solchen Fläche aufweisen. Eine solche Reibblattanordnung wäre eine Reibzylinderanordnung in dem Sinne, dass das Distanzblatt ist eine Distanzzylinder und das Messerblatt ist eine Messerzylinder oder ein Messerzylinderabschnitt ist. Zum Schneiden eines an eine Reibzylinderanordnung herangeführten Reibguts könnte die Reibzylinderanordnung um ihre Zylinderache in Rotation versetzt werden, etwa in der Art, wie es von handelsüblichen zylinderförmigen Parmesanreiben bekannt ist.

Bei einer bevorzugten Reibblattanordnung ist der Abstand zwischen dem Messerblatt und dem Distanzblatt veränderbar. Dadurch kann vorteilhafterweise das Maß eingestellt werden, um das die (Teile der) Schneidkante auf der dem Messerblatt abgewandten Seite des Distanzblatts über die Fläche des Distanzblatts hinausragen. Zwecks des Einstellens des Abstands ist die bevorzugte Reibblattanordnung mit Mitteln zum Lösen und Arretieren des Messerblatts relativ zum Distanzblatt ausgestattet. Weiter sind vorzugsweise Auswahlmittel vorgesehen, mit denen ein Benutzer einen gewünschten Abstand auswählen oder einstellen kann. Typischerweise wird ein Benutzer zur Änderung des Abstands, und damit der Größe des geschnittenen Reibgutes, zunächst die relative Arretierung des Distanzblatts und des Messerblatts lösen, dann mit dem Auswahlmittel einen neuen gewünschten Abstand auswählen und einstellen und schließlich Messerblatt und Distanzblatt wieder relativ zueinander arretieren.

Dem Fachmann sind zahlreiche Mechanismen wohlbekannt, mit denen sich dies erzielen lässt. Einen geeigneten Mechanismus offenbart z.B. die bereits weiter oben genannten Patentschrift US 4,283,979, deren diesbezüglicher Inhalt durch Verweis Teil der vorliegenden Erfindungsbeschreibung ist. Die dort offenbarte Lebensmittelhobelanordnung umfasst ebenfalls eine Distanzscheibe sowie ein drehfest mit diesem verbundenes aber axial verschiebbares Messer. Der Fachmann kann diesen Mechanismus mit den erforderlichen Modifikationeri übernehmen, wobei er u.a. die bekannte durch die erfindungsgemäße Distanzscheibe und das bekannte Messer durch die erfindungsgemäße Messerscheibe zu ersetzen hätte.

In einer bevorzugten Ausführungsform der Erfindung wäre für den Abstand zwischen Distanzblatt und Messerblatt auch eine Einstellung wählbar, bei der die Schneidkanten des Messerblatts nicht auf der dem Messerblatt abgewandten Seite des Distanzblatts über die Fläche des Distanzblatts hinausragen. Eine solche Einstellung kann für den Nichtgebrauch der Reibblattanordnung nützlich sein, weil sie Verletzungen verbeugen, und darüber hinaus die Schneidkanten vor etwaigen Beschädigungen schützen kann.

In einer bevorzugten Ausführung der Erfindung weist das Distanzblatt mehrere Öffnungen auf, durch die jeweils eine oder mehrere, besonders vorzugsweise genau eine Schneidkante hinausragen kann. Dadurch kann die jeweilige Öffnung besonders präzise an die Form der Schneidkante(n) angepasst werden, und es kann sichergestellt werden, dass das an die Reibblattanordnung herangeführte Reibgut präzise zur Schneidkante geführt und abgeschnitten wird. Auch kann vorteilhaft vermieden werden, dass Reibgut zwischen Distanzblatt und Messerblatt gelangt. Alternativ sind auch Ausführungen der Erfindung denkbar, bei denen mehrere Schneidkanten durch eine gemeinsame Öffnung ragen. Solche Ausführungen könnten die Herstellung der Reibblattanordnung vereinfachen.

Das bevorzugte Messerblatt weist mindestens ein Loch auf, durch das das von der Schneidkante abgeschnittene Schneidgut durch das Messerblatt treten kann. Vorteilhafterweise lässt sich die erfindungsgemäße Reibblattanordnung dadurch bei Küchenmaschinen und Bearbeitungsverfahren einsetzen, bei denen das Reibgut der Reibblattanordnung von einer Seite, z. B. der Oberseite, zugeführt wird, beim Zerschneiden die Reibblattanordnung durchdringt und auf der anderen Seite, z.B. der Unterseite der Reibblattanordnung in einen Sammelbehälter gelangt, gewöhnlich der Schwerkraft folgend.

In einer bevorzugten Ausführung der Erfindung bilden die Schneidkanten jeweils zumindest einen Teil des Rands eines Lochs in dem Messerblatt, durch das von der Schneidkante abgeschnittenes Reibgut durch das Messerblatt treten kann. Dadurch lässt sich eine besonders einfache Konstruktion des Messerblatts realisieren.

Bevorzugte Schneidkanten ragen jeweils torförmig aus der Grundfläche des Messerblatts heraus, d.h. das eine Schneidkante an einer ersten Stelle der Grundfläche des Messerblatts austritt und an einer zweiten, zu der ersten benachbarten Stelle wieder eintritt. Typischerweise hat eine solche Schneidkante einen bogenförmigen Verlauf. Die Erfindung umfasst aber z.B. auch Schneidkanten mit einem rechteckigen oder dreieckigen Verlauf. Entsprechend hat das zerschnittene Reibgut einen bogenförmigen, rechteckigen oder dreieckigen Querschnitt.

Das Messerblatt und das Distanzblatt sind vorzugsweise im Wesentlichen parallel zueinander angeordnet. Es sind aber auch Ausführungen der Erfindung denkbar, in denen Messer und Distanzblatt in einem Winkel zueinander angeordnet sind. Außerdem sind vorzugsweise Mittel vorgesehen, die ein Verdrehen des Messerblatts relativ zum Distanzblatt verhindern können, sodass das Messerblatt und das Distanzblatt sich bei Gebrauch nicht relativ zueinander drehen können.

Erfindungsgemäß kann die Reibblattanordnung in Bewegung, vorzugsweise in Rotation versetzt werden, um an sie herangeführtes Reibgut zu zerschneiden. Zu diesem Zweck ist die Reibblattanordnung mit Mitteln ausgestattet, an die ein Antrieb angreifen kann, um die Reibblattanordnung in Bewegung, vorzugsweise in Rotation zu versetzen. Geeignete Mittel sind z.B. ein Loch oder eine Buchse, in die ein Schaft des Antriebs eingreifen kann, oder ein Schaft, der in eine Buchse des Antriebs eingreifen kann. Der Antrieb ist vorzugsweise der Antrieb einer Küchenmaschine. Das Messerblatt ist vorzugsweise im Wesentlichen kreisförmig. Das Distanzblatt ist vorzugsweise im Wesentlichen kreisförmig. Die Reibblattanordnung ist vorzugsweise im Wesentlichen kreisförmig.

In einer bevorzugten Ausführung der Erfindung ist nicht das gesamte Distanzblatt, sondern sind nur ein oder mehrere begrenzte Bereiche des Distanzblatts mit der einen oder den mehreren Öffnungen ausgestattet, durch die die Schneidkanten ragen. Bei einem kreisförmigen Reibblatt, das in Rotation versetzt werden kann, ist es z.B. nur ein Sektor des Blatts, z. B. mit einer Ausdehnung von zwischen 45 und 120°. Dadurch kann vorteilhaft erreicht werden, dass zwischen Schneidvorgängen, bei denen dieser Sektor das Reibgut passiert, genügend Zeit verbleibt, um das Reibgut für den nächsten Schneidvorgang nachzuführen.

In einer bevorzugten Ausführung der Erfindung ist der Bereich oder sind die Bereiche, also z.B. ein oder mehrere Sektoren, die die Öffnung oder die Öffnungen aufweisen, gegenüber dem übrigen Distanzblatt parallel versetzt. Besonders vorzugsweise ist der Bereich oder sind die Bereiche in Richtung des Messerblatts zurückversetzt. Diese Maßnahme kann vorteilhafterweise dazu beitragen, zu verhindern, dass Reibgut sich in den Öffnungen verfängt oder im Bereich der Öffnungen in des Distanzblatts zwischen Distanzblatt und Messerblatt gerät. In einer anderen Ausführung der Erfindung ist der Bereich oder sind die Bereiche entgegen der Richtung des Messerblatts nach vorne versetzt.

### Kurzbeschreibung der Zeichnungen

Weitere vorteilhafte Ausgestaltungen werden nachfolgend an Hand von in den Zeichnungen dargestellten Ausführungsbeispielen, auf welche die Erfindung jedoch nicht beschränkt ist, näher beschrieben.

Es zeigen schematisch:
- Fig. 1: einen Querschnitt durch eine erfindungsgemäße Reibblattanordnung mit Messerblatt und Distanzblatt;
- Fig. 2: eine erfindungsgemäße Reibblattanordnung in perspektivischer Ansicht;
- Fig. 3: eine perspektivische Ansicht des Messerblatts der Reibblattanordnung nach Fig. 2;
- Fig. 4: die perspektivische Ansicht des Distanzblatts der Reibblattanordnung der Fig. 2; und
- Fig. 5A und 5B: in zwei Schnittansichten eine Schneide mit rechteckiger Schneidkante.

### Ausführliche Beschreibung anhand von Ausführungsbeispielen

Bei der nachfolgenden Beschreibung bevorzugter Ausführungsformen der vorliegenden Erfindung bezeichnen gleiche Bezugszeichen gleiche oder vergleichbare Komponenten.

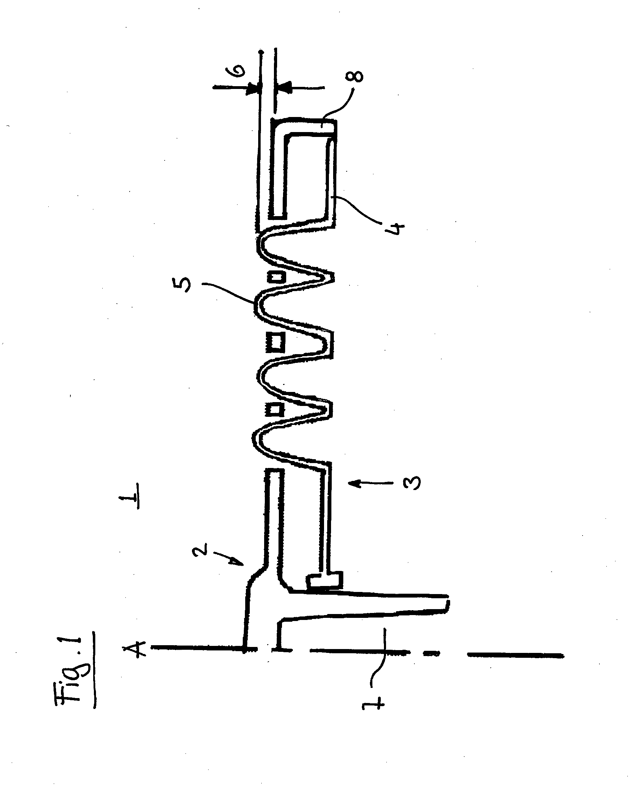

In Fig. 1 ist eine beispielhafte kreisrunde scheibenförmige Reibblattanordnung 1 mit einem kreisrunden scheibenförmigen Distanzblatt 2 und einem kreisrunden scheibenförmigen Messerblatt 3 in Querschnittsansicht zu sehen, wobei von einer Mittelachse der Reibblattanordnung A aus gesehen nur eine Hälfte der Anordnung 1 dargestellt ist. Distanzblatt 2 und Messerblatt 3 sind parallel zueinander angeordnet. Das Messerblatt 3 weist eine Grundfläche 4 und mehrere Schneidkanten 5 auf. Durch Verschieben des Messerblatts 3 gegenüber dem Distanzblatt 2 in axialer Richtung lässt sich das Maß 6 einstellen, mit dem die Schneidkanten 5 des Messerblatts3 durch das Distanzblatt 2 hinaus auf der dem Messerblatt 3 abgewandten Seite des Distanzblatts 2 herausragen. Wird das Messerblatt 3 näher an das Distanzblatt 2 herangeführt, ragen die Schneidkanten 5 weiter hinaus. Dadurch wird das Reibgut (nicht dargestellt) in dickere Streifen zerschnitten. Aufgrund der bogenförmigen Ausgestaltung der Schneidkanten 5 fällt das zerschnittene Reibgut bei näher an das Distanzblatt 2 herangeführtem Messerblatt 3 außerdem breiter aus.

Das Distanzblatt 2 ist im Zentrum mit einer Buchse 7 ausgestattet, mit der sie an einem Antriebsschaft einer mit einem Durchlaufschnitzler ausgestatteten Küchenmaschine (nicht dargestellt) anbringbar ist, um in Rotation versetzt zu werden. Die Buchse läuft durch ein Mittelloch 14 des scheibenförmigen Messerblatts 3. Der Mechanismus, mit dem der Abstand zwischen Distanzblatt 2 und Messerblatt 3 eingestellt wird und diese beiden Blätter 2, 3 zueinander arretiert werden, ist in der Figur nicht dargestellt. Zahlreiche Ausgestaltungen zu diesem Zweck sind denkbar. Der Fachmann könnte z.B. mit geeigneten Anpassungen auf den Mechanismus der US 4,283,979 zurückgreifen. Alternativ kann der Fachmann auch eine Anstandshülse vorsehen, die über die Buchse 7 zwischen Distanzblatt 2 und Messerblatt 3 geschoben wird, in Verbindung mit einer Ringmutter vorsehen, die in einem Außengewinde der Buchse 7 läuft und von der Unterseite (Öffnungsseite) über dem Messerblatt 3 auf die Buchse 7 aufgeschraubt wir, um in angezogenem Zustand das Messerblatt 3 gegen die Abstandshülse und diese wiederum gegen das Distanzblatt 2 presst. Durch auswechselbare, unterschiedlich lange Anstandshülsen ließen sich unterschiedliche Abstände zwischen Distanzblatt 2 und Messerblatt 3 einstellen.

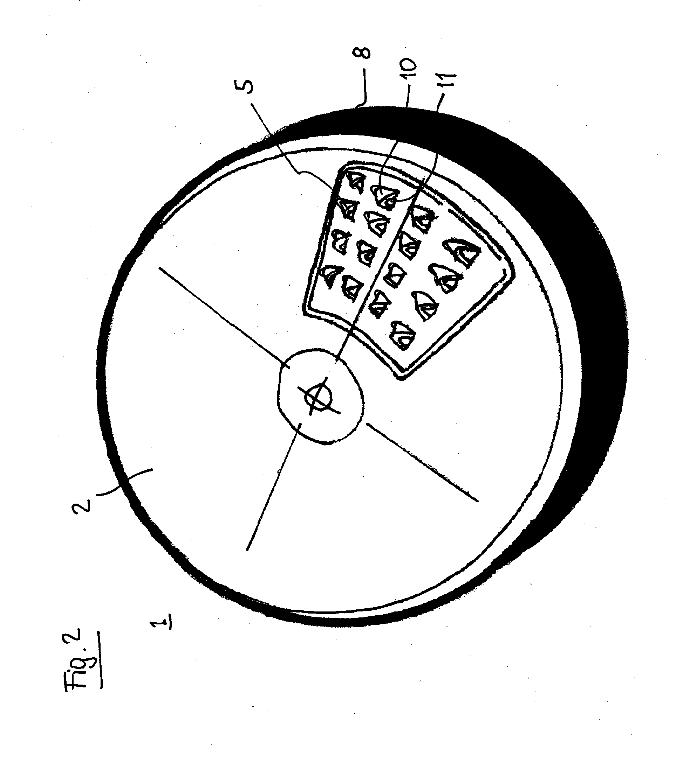

Fig. 2 zeigt eine erfindungsgemäße kreisförmige Reibblattanordnung 1 in perspektivischer Ansicht. DasDistanzblatt 2 ist, wie auch in Fig. 1 zu sehen, am äußeren Rand mit einer in Richtung der Seite des Messerblatts 3 weisenden Auskragung 8 ausgestattet. Das Messerblatt 3 wird von dieser Auskragung umschlossen. dadurch ist das Messerblatt 3 geschützt und Verletzungen kann vorgebeugt werden.

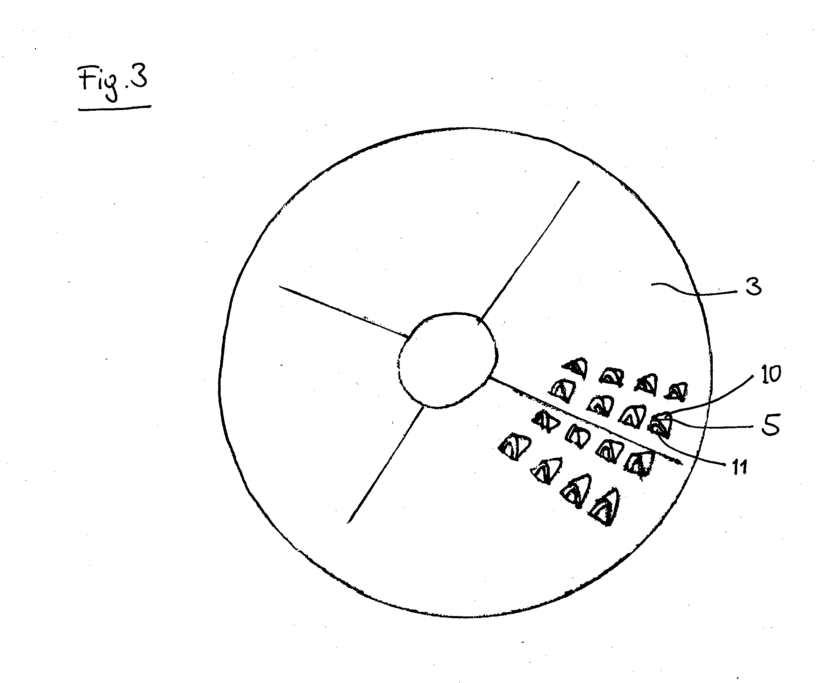

Das kreisförmige Messerblatt 3 der Reibblattanordnung 1 der Fig. 2 ist in Fig. 3 dargestellt. Sie weist in einem Sektor 9 mehrere zu einer Seite des Blatts herausstehende Prägungen auf, die Löcher bilden, deren aus der Ebene des Messerblatts 3 herausstehender bogenförmiger Rand die Schneidkanten 5 darstellen. Die Schneiden 10, deren Abschluss die Schneidkanten 5 bilden, ragen ebenfalls bogenförmig aus der Ebene des Messerblatts 3 hervor. Diese Schneidkanten 5 bilden jeweils Teile des Rands eines Lochs 11, durch die das Reibgut beim Schneiden von einer Seite des Messerblatts 3 durch das Messerblatt 3 auf deren andere Seite hindurchtreten kann. Bei einer bevorzugten Küchenmaschine fällt es von dort in einen Sammelbehälter.

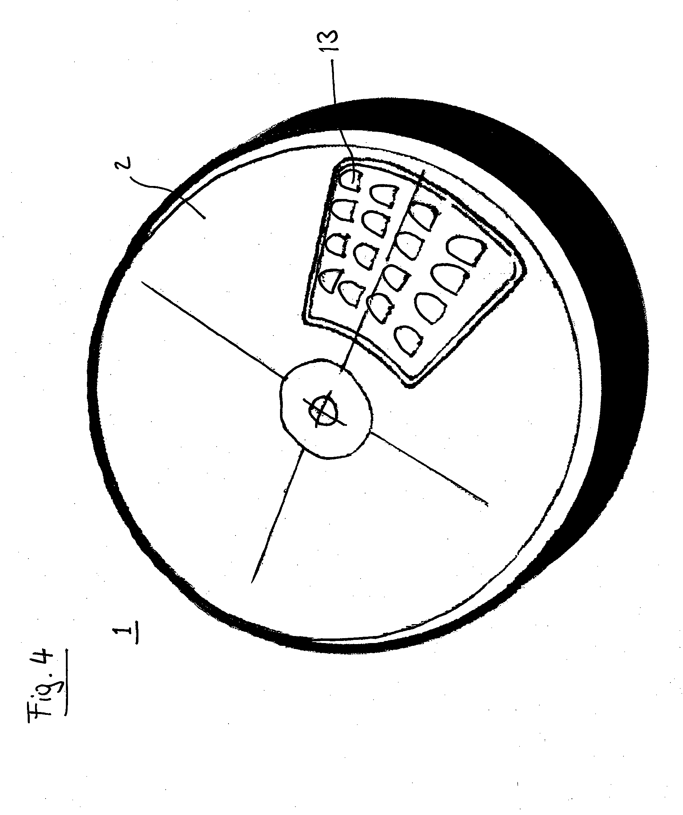

Das in Fig. 4 dargestellte Distanzblatt 2 der Reibblattanordnung 1 der Fig. 2 weist in einem Sektor 12 zu der Form der aus der Ebene des Messerblatts 3 herausstehenden Schneiden 10 korrespondierende Öffnungen 13 auf, durch die die Schneiden 10 und insbesondere ihre Schneidkanten 5 hindurchtreten können. Dabei ragt durch jede Öffnung 13 genau eine Schneide 10 mit ihrer zugeordneten Schneidkante 5. Außerdem ist der gesamte Sektor 12 des Distanzblatts 2, der mit diesen Öffnungen 13 versehen ist, ca. einen halben Millimeter gegenüber dem Rest des Distanzblatts 2 nach unten abgesetzt. Dadurch kann verhindert werden, dass sich Reibgut in den Öffnungen 13 verfängt und zwischen Distanzblatt 2 und Messerblatt 3 gelangt.

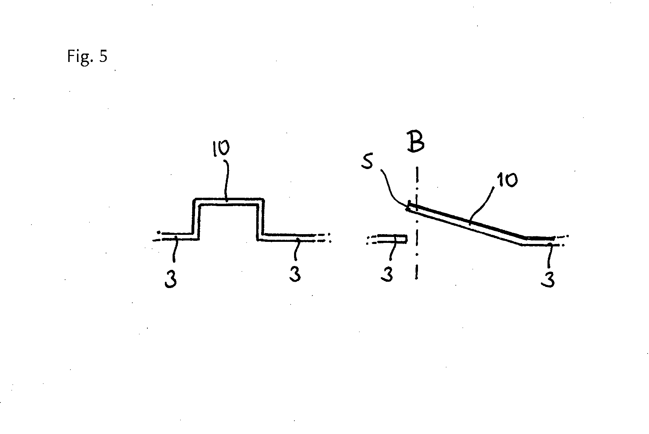

Eine alterative Schneide 10 mit einer alternativen Schneidkante 5 ist in Figuren 5A und 5B zu sehen. Hier verläuft die Schneidkante 5 nicht bogenförmig sondern rechteckig, wie sich aus Ansicht 5A, die einen Schnitt entlang der Ebene B der Ansicht 5B darstellt, schließen lässt. Entsprechend hat auch die Schneide 10 eine rechteckig rampenförmige Ausbildung, wie in der Querschnittsdarstellung 5B der Schneide 10 zu erkennen ist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die Erfindung ermöglicht einem Küchenmaschinenhersteller seinen Kunden mit einem einzigen Messerblatt-Typ, also ohne eine Vielzahl unterschiedlicher Messerblätter bereitstellen zu müssen, Reibgut zu verschiedenen Formen und Größen zu zerkleinern. Denn bei gleichem Messerblatt lassen sich allein durch unterschiedliche Abstände zwischen Messerblatt und Distanzblatt solche unterschiedlichen Größen und Formen des zerschnittenen Reibguts erzielen. Dadurch wird bei geringen Kosten eine größere Individualisierung des Reibprodukts möglich.

## Patentansprüche

1. Reibblattanordnung (1) für eine Küchenmaschine, wobei die Reibblattanordnung (1) ein Messerblatt (3) mit einer Grundfläche (4) und mehreren Schneidkanten (5) umfasst, um ein an die Reibblattanordnung (1) herangeführtes Reibgut zu schneiden, und die Schneidkanten (5) auf einer Schneidseite des Messerblatts (3) über die Ebene der Grundfläche (4) hinausragen, wobei die Reibblattanordnung (1) außerdem ein Distanzblatt (2) umfasst, das auf der Schneidseite des Messerblatts (3) angeordnet ist und eine oder mehrere Öffnungen (13) aufweist, durch die wenigstens Teile der Schneidkanten (5) hindurch reichen können, um auf der dem Messerblatt (3) abgewandten Seite des Distanzblatts (2) über die Fläche des Distanzblatts (2) hinauszuragen,
**dadurch gekennzeichnet, dass**
die Reibblattanordnung (1) mit Mitteln ausgestattet ist, an die ein Antrieb angreifen kann, um die Reibblattanordnung (1) in Bewegung zu versetzen.

2. Reibblattanordnung (1) nach Anspruch 1, **dadurch gekennzeichnet, dass** das Messerblatt eine Messerscheibe und das Distanzblatt eine Distanzscheibe ist.

3. Reibblattanordnung (1) nach Anspruch 1 oder 2, **dadurch gekennzeichnet, dass** der Abstand zwischen dem Messerblatt (3) und dem Distanzblatt (2) veränderbar ist, um das Maß (6) einzustellen, um das die Teile der Schneidkanten (5) auf der dem Messerblatt (3) abgewandten Seite des Distanzblatts (2) über die Fläche des Distanzblatts (2) hinausragen.

4. Reibblattanordnung (1) nach einem der vorherigen Ansprüche, **dadurch**
**gekennzeichnet, dass**
das Distanzblatt (2) mehrere Öffnungen (13) aufweist, durch die jeweils eine oder mehrere Schneidkanten (5) des Messerblatts hinausragen können.

5. Reibblattanordnung (1) nach einem der vorherigen Ansprüche, **dadurch**
**gekennzeichnet, dass**
Das Messerblatt (3) mindestens ein Loch (11) aufweist, durch das das von der Schneidkante (5) abgeschnittenes Reibgut durch die Messerblatt (3) treten kann.

6. Reibblattanordnung (1) nach einem der vorherigen Ansprüche, **dadurch**
**gekennzeichnet, dass**
die Schneidkanten (5) jeweils zumindest einen Teil des Rands eines Lochs (11) in dem Messerblatt bilden, durch das von der Schneidkante (5) abgeschnittenes Schneidgut durch das Messerblatt (3) treten kann.

7. Reibblattanordnung (1) nach einem der vorherigen Ansprüche, **dadurch**
**gekennzeichnet, dass**
Die Schneidkanten (5) jeweils torförmig aus der Grundfläche (4) des Messerblatts (3) herausragen.

8. Reibblattanordnung (1) nach einem der vorherigen Ansprüche, **dadurch**
**gekennzeichnet, dass**
Das Messerblatt (3) und das Distanzblatt (2) parallel zueinander angeordnet sind.

9. Reibblattanordnung (1) nach einem der vorherigen Ansprüche, **dadurch**
**gekennzeichnet, dass**
nur ein oder mehrere begrenzte Bereiche des Distanzblatts (2) die eine oder mehrere Öffnungen (13) aufweisen, durch die die Schneidkanten (5) ragen.

10. Reibblattanordnung (1) nach Anspruch 9, **dadurch gekennzeichnet, dass** der Bereich oder die Bereiche des Distanzblatts (2), die eine oder mehrere Öffnungen (10) aufweisen, gegenüber dem übrigen Distanzblatt (2) parallel versetzt ist.

11. Küchenmaschine mit einer Reibblattanordnung (1) nach einem der vorherigen Ansprüche.

## Claims

1. Grating blade arrangement (1) for a kitchen machine, wherein the grating blade arrangement (1) comprises a cutting blade (3) with a base surface (4) and a number of cutting edges (5) for cutting items to be grated introduced onto the grating blade (1), and the cutting edges (5) project on a cutting side of the cutting blade (3) above the plane of the base surface (4), wherein the cutting blade arrangement (1) also comprises a spacer (2), which is disposed on the cutting side of the cutting blade (3) and has one or more openings (13) through which at least parts of the cutting edges (5) can extend, so as to project above the surface of the spacer (2) on the side of the spacer (2) facing away from the cutting blade (3),
**characterised in that**
the grating blade arrangement (1) is equipped with means into which a drive can engage in order to set the grating blade arrangement (1) into motion.

2. Grating blade arrangement (1) according to claim 1, **characterised in that** the cutting blade is a cutting disc and the spacer is a spacer disc.

3. Grating blade arrangement (1) according to claim 1 or 2, **characterised in that** the distance between the cutting blade (3) and the spacer (2) is variable, in order to set the distance (6) by which the parts of the cutting edges (5) on the side of the spacer (2) facing away from the cutting blade (3) project above the surface of the spacer (2).

4. Grating blade arrangement (1) according to one of the preceding claims,
**characterised in that**
the spacer (2) has a number of openings (13), through which one or more of the number of cutting edges (5) of the cutting blade can project in each case.

5. Grating blade arrangement (1) according to one of the preceding claims,
**characterised in that**
the cutting blade (3) has at least one hole (11) through which the items to be grated cut off by the cutting edge (5) can pass through the cutting blade (3).

6. Grating blade arrangement (1) according to one of the preceding claims, /
**characterised in that**
the cutting edges (5) each form at least a part of the edge of a hole (11) in the cutting blade, through which the items cut off by the cutting edge (5) can pass through the cutting blade (3).

7. Grating blade arrangement (1.) according to one of the preceding claims,
**characterised in that**
the cutting edges (5) each project in the shape of an arch from the base surface (4) of the cutting blade (3).

8. Grating blade arrangement (1) according to one of the preceding claims,
**characterised in that**
the cutting blade (3) and the spacer (2) are disposed in parallel to one another.

9. Grating blade arrangement (1) according to one of the preceding claims,
**characterised in that**
only one or more restricted areas of the spacer (2) have one or more openings (13), through which the cutting edges project (5).

10. Grating blade arrangement (1) according to claim 9, **characterised in that** the area or the areas of the spacer (2), which have one or more openings (10), are offset in parallel in relation to the rest of the spacer (2).

11. Kitchen machine with a grating blade arrangement (1) according to one of the preceding claims.

## Revendications

1. Agencement de lame de râpe (1) pour un robot ménager, l'agencement de lame de râpe (1) comprenant une lame de couteau (3) munie d'une surface de base (4) et plusieurs arêtes de coupe (5) afin de couper un produit à râper amené vers l'agencement de lame de râpe (1), et les arêtes de coupe (5) étant en saillie au-dessus du plan de la surface de base (4) sur un côté de coupe de la lame de couteau (3), l'agencement de lame de râpe (1) comprenant en outre une lame d'écartement (2) qui est disposée sur le côté de coupe de la lame de couteau et présente un ou plusieurs orifices (13) à travers lesquels au moins des parties des arêtes de coupe (5) peuvent pénétrer afin de dépasser au-delà de la surface de la lame d'écartement (2) sur le côté de la lame d'écartement (2) détourné de la lame de couteau (3),
**caractérisé en ce que**
l'agencement de lame de râpe (1) est équipé de moyens sur lesquels un entraînement peut avoir prise afin de mettre en mouvement l'agencement de lame de râpe (1).

2. Agencement de lame de râpe (1) selon la revendication 1, **caractérisé en ce que** la lame de couteau est un disque de coupe et **en ce que** la lame d'écartement est un disque d'écartement.

3. Agencement de lame de râpe (1) selon la revendication 1 ou 2, **caractérisé en ce que** l'écart entre la lame de couteau (3) et la lame d'écartement (2) est modifiable afin de régler la dimension (6) de laquelle les parties des arêtes de coupe (5) dépassent au-delà de la surface de la lame d'écartement (2) sur le côté de la lame d'écartement (2) détourné de la lame de couteau (3).

4. Agencement de lame de râpe (1) selon l'une quelconque des revendications précédentes, **caractérisé en ce que**
la lame d'écartement (2) présente plusieurs orifices (13) à travers lesquels respectivement une ou plusieurs arêtes de coupe (5) de la lame de couteau peuvent dépasser.

5. Agencement de lame de râpe (1) selon l'une quelconque des revendications précédentes, **caractérisé en ce que**
la lame de couteau (3) présente au moins un trou (11) à travers lequel le produit à râper découpé par l'arête de coupe (5) peut passer à travers la lame de couteau (3).

6. Agencement de lame de râpe (1) selon l'une quelconque des revendications précédentes, **caractérisé en ce que**
les arêtes de coupe (5) forment respectivement au moins une partie du bord d'un trou (11) dans la lame de couteau, à travers lequel le produit à râper découpé par l'arête de coupe (5) peut passer à travers la lame de couteau (3).

7. Agencement de lame de râpe (1) selon l'une quelconque des revendications précédentes, **caractérisé en ce que**
les arêtes de coupe (5) dépassent respectivement en forme de porte hors de la surface de base (4) de la lame de couteau (3).

8. Agencement de lame de râpe (1) selon l'une quelconque des revendications précédentes, **caractérisé en ce que**
la lame de couteau (3) et la lame d'écartement (2) sont disposées parallèlement l'une à l'autre.

9. Agencement de lame de râpe (1) selon l'une quelconque des revendications précédentes, **caractérisé en ce que**
seulement une ou plusieurs zones délimitées de la lame d'écartement (2), qui présentent un ou plusieurs orifices (13), dépassent à travers les arêtes de coupe (5).

10. Agencement de lame de râpe (1) selon la revendication 9, **caractérisé en ce que** la zone ou les zones de la lame d'écartement (2) qui présentent un ou plusieurs orifices (10) sont décalées parallèlement par rapport au reste de la lame d'écartement (2).

11. Robot ménager muni d'un agencement de lame de râpe (1) selon l'une quelconque des revendications précédentes.
